# FASCICULE DE BREVET EUROPEEN

(11) **EP 3 421 123 B1**
(45) Date de publication et mention de la délivrance du brevet: **13.11.2019**
(21) Numéro de dépôt: 18179760.6
(22) Date de dépôt: 26.06.2018
(51) Int. Cl.: B01J 19/24, B01J 8/00, F28D 9/00, F28F 13/08

(54) **MODULE DE REACTEUR-ECHANGEUR A AU MOINS DEUX CIRCUITS DE FLUIDE REALISE PAR EMPILEMENT DE PLAQUES APPLICATIONS AUX REACTIONS CATALYTIQUES EXOTHERMIQUES OU ENDOTHERMIQUES**
REAKTOR-WÄRMETAUSCHERMODUL MIT MINDESTENS ZWEI FLUIDKREISLÄUFEN, DAS DURCH PLATTENSTAPELUNG ENTSTEHT, ANWENDUNGEN BEI EXOTHERMEN ODER ENDOTHERMEN KATALYTISCHEN REAKTIONEN
REACTOR-EXCHANGER MODULE WITH AT LEAST TWO FLUID CIRCUITS PRODUCED BY STACKING OF PLATES, APPLICATIONS TO EXOTHERMIC OR ENDOTHERMIC CATALYTIC REACTIONS

(30) Priorité: 28.06.2017 FR 1755934
(43) Date de publication de la demande: 02.01.2019
(73) Titulaire: Commissariat à l'Energie Atomique et aux Energies Alternatives, 75015 Paris (FR)
(72) Inventeur: BENGAOUER, Alain, 38920 CROLLES (FR)
(74) Mandataire: Nony

(56) Documents cités:
- EP-A1- 3 138 628
- DE-A1- 2 016 614
- DE-U1- 8 521 746

## Description

### Domaine technique

La présente invention concerne les réacteurs-échangeurs de chaleur à au moins deux circuits de fluide comportant chacun des canaux, réalisés par empilement de plaques.

Ces réacteurs chimiques usuellement appelés aussi échangeurs-réacteurs mettent en œuvre un procédé en continu selon lequel on injecte simultanément une quantité faible de co-réactants, à l'entrée d'un premier circuit de fluide, appelé usuellement circuit de réactifs, de préférence équipé d'un mélangeur, et on récupère le produit chimique obtenu en sortie dudit premier circuit. Le deuxième circuit de fluide, appelé usuellement utilité ou circuit de caloporteur, a pour fonction de contrôler thermiquement la réaction chimique, soit en apportant la chaleur nécessaire à la réaction, soit au contraire en évacuant la chaleur dégagée par celle-ci.

La présente invention vise à améliorer le contrôle thermique des réactions.

L'application principale visée est la réalisation de réacteurs catalytiques, et en particulier des réacteurs catalytiques utilisant des catalyseurs solides et dédiés à des réactions fortement exothermiques ou endothermiques.

Plus précisément, un réacteur-échangeur selon l'invention est particulièrement adaptée à la mise en œuvre de procédés de synthèse de carburants et combustibles, tels que le gaz naturel de substitution (acronyme anglais SNG pour Substitute Natural Gas), le diméthyléther (DME), le méthanol (MeOH),... à partir d'hydrogène et d'oxydes de carbones ou à partir de gaz de synthèse (mélange d'hydrogène et d'oxydes de carbones) ou encore de réactions de reformage, par exemple du méthane.

Dans ces procédés, les réactions sont très exothermiques ou très endothermiques. Par exemple dans le cas de production de méthane à partir de gaz de synthèse, les principales réactions enjeu sont :

CO+3H₂ →CH₄ +H₂O

CO₂+4H₂→ CH₄ +2H₂O

CO+H₂O→ CO₂ +H₂

Ainsi, les réactions chimiques particulièrement visées par l'invention sont les réactions de méthanation de CO et/ou de CO₂, les réactions de synthèse du méthanol et du DME, les réactions de reformage humide ou à sec du méthane ou d'autres hydrocarbures, les réactions d'oxydation, ou encore de synthèse Fischer-Tropsch.

Bien que décrite plus spécifiquement en référence à l'application principale de réactions catalytiques hétérogènes, l'invention peut aussi s'appliquer à des réactions de catalyse homogène dans laquelle les réactifs se trouvent dans la même phase que le catalyseur.

De manière générale, l'invention peut s'appliquer à toutes réactions catalytiques ou non.

### Etat de la technique

Plusieurs types de réacteurs catalytiques hétérogènes ont déjà fait l'objet de nombreuses réalisations industrielles.

Cependant, le caractère hétérogène (polyphasique) de la réaction à produire, i.e. une ou plusieurs phases réactives et une phase catalytique, rend le dimensionnement des réacteurs difficile, lorsqu'il s'agit de garantir un taux de conversion maximal, une bonne sélectivité de la réaction et un bon contrôle de la température de façon à limiter la désactivation des catalyseurs.

Dans le cas de réactions catalytiques fortement exothermiques, le problème du contrôle thermique est crucial car l'évolution de la température dans le réacteur conditionne le taux de conversion et la sélectivité de la réaction ainsi que la cinétique de désactivation du catalyseur. En effet, les cinétiques de réaction sont plus fortes à haute température selon la loi d'Arrhenius, mais les réactions étant équilibrées et exothermiques, l'équilibre thermodynamique est plus favorable à basse température.

On peut classer en plusieurs catégories les principaux types de réacteurs connus pour les réactions exothermiques.

On peut citer tout d'abord les réacteurs à lit fixe dans lesquels le catalyseur solide est intégré sous forme de grains ou pastilles. Ces réacteurs à lit fixe peuvent être adiabatiques et agencés en cascade. L'exo thermicité de la réaction est alors généralement gérée par une dilution des réactifs en entrée du premier étage de réaction, par exemple par recirculation des produits et par la mise en place d'échangeurs de chaleur destinés à refroidir le mélange réactifs-produits entre les différents réacteurs. Cette architecture de réacteurs en cascade présente l'avantage de la simplicité de fabrication mais rend difficile le contrôle thermique pour des réactions exothermiques et nécessite l'utilisation de catalyseurs stables à haute température.

On peut citer également les réacteurs de type à lit fluidisé ou entrainé dans lesquels le catalyseur à fluidifier est sous forme de poudre dont l'attrition doit être maitrisée. La fluidisation du catalyseur permet une bonne homogénéisation thermique du mélange de réactifs dans le réacteur, ce qui évite les points chauds et permet donc un meilleur contrôle thermique. L'inconvénient est que le volume de réacteur dédié est plus important que dans le cas des réacteurs à lits fixes à écoulement piston.

Enfin, on peut citer les réacteurs-échangeur avec des canaux structurés tels que les réacteurs multitubulaires de type tube-calandre, les réacteurs monolithiques et les réacteurs-échangeurs à plaques, dans lesquels le catalyseur solide est généralement déposé sous forme de revêtement dans les canaux de circuit de circulation des réactifs. Dans ces réacteurs-échangeurs, la réaction chimique a lieu au sein d'un ou plusieurs canaux de circuit de réactifs refroidi continument par un fluide caloporteur. Dans les réacteurs de type tube-calandre, le fluide caloporteur circule en périphérie de canaux de circulation des réactifs en formant un bain caloporteur. Dans les réacteurs-échangeurs de chaleur à plaques, les canaux de circulation de réactifs comme les canaux de circulation du fluide caloporteur peuvent être entièrement réalisés par rainurage (gravage) dans une seule plaque ou réalisés par rainurage (gravage) dans deux plaques dont l'assemblage mutuel forme un espace délimitant les canaux. Selon la technologie choisie pour le caloporteur, ces réacteurs peuvent être qualifiés d'isothermes ou d'anisothermes.

La combinaison de réacteurs d'une même catégorie ou de catégories différentes au sein d'une même unité de production peut bien entendu être envisagée, afin d'améliorer la conversion, la flexibilité ou la valorisation de la chaleur récupérée.

Par exemple, le brevet US 4298694 propose de combiner un réacteur adiabatique et un réacteur isotherme pour la production de méthane. Chacun des réacteurs traite une partie du flux d'entrée de gaz. Cela permet à la fois de récupérer la chaleur de réaction sous la forme de vapeur surchauffée qui est obtenue au moyen d'un échangeur connecté en sortie du réacteur adiabatique, et de produire un gaz à forte teneur en méthane grâce à la faible température obtenue en sortie du réacteur isotherme.

Dans le cas des réacteurs-échangeurs, il existe de nombreuses variantes liées à la mise en œuvre du catalyseur offrant des performances différentes en termes de surface spécifique réactive accessible au fluide, de propriétés thermiques et de pertes de charges.

Le point critique dans la conception de réacteurs-échangeurs pour des réactions fortement exothermiques respectivement endothermiques est la maitrise de l'élévation de température du point chaud respectivement froid qui se produit en entrée de réacteur.

Par la suite, on décrit les solutions connues de l'homme de l'art dans le cas de réactions exothermiques utilisant un lit fixe de catalyseur, ces solutions étant transposables pour les réactions endothermiques.

Une solution pour maîtriser la température peut consister à maintenir la température du caloporteur à une valeur assez basse en entrée de façon à compenser au moins en partie l'élévation de température du catalyseur au point chaud. L'inconvénient de cette solution est que lors de l'avancement de la réaction dans les canaux, celle-ci devient moins rapide à cause de la moindre quantité de réactifs par rapport au catalyseur, la puissance thermique générée ou consommée devient moindre et la température du fluide diminue, ce qui limite la cinétique et conduit à un taux de conversion plus faible.

Pour obtenir une conversion plus importante, il convient alors de mettre en série plusieurs réacteurs-échangeurs isothermes ou quasi-isothermes. Cependant, dans cette configuration, il est nécessaire de contrôler la température du fluide caloporteur indépendamment pour chaque étage de réacteur, ce qui complexifie le système et induit un surcoût important.

Le contrôle de température peut aussi être assuré par une réduction de dimension des canaux, des dimensions de l'ordre de quelques millimètres étant satisfaisantes. Cependant, la quantité de poudre de catalyseur que l'on peut introduire est alors limitée, ce qui nécessite d'avoir à réaliser les canaux plus longs ou d'utiliser plusieurs étages de réaction, au détriment de la compacité et au prix de pertes de charges plus élevées.

Le contrôle de température peut aussi être assuré par une alimentation étagée de façon à ce que l'un ou plusieurs des réactifs se trouvent en quantité limitée au contact du catalyseur à l'entrée du réacteur et que, de ce fait, la puissance thermique générée ou consommée soit localement plus faible que si tout le réactif était introduit en entrée du réacteur.

Le brevet US8961909 décrit un réacteur-échangeur de types à tubes-calandre dans lequel un tube percé d'orifices est inséré dans chaque tube de circulation de réactifs. Avec ces tubes percés, il est possible d'injecter qu'une fraction de la quantité totale de réactifs au contact du catalyseur en entrée de réacteur, cette fraction augmentant au fur et à mesure de l'avancement dans les canaux réactifs. Cependant, la conception d'une alimentation étagée est complexe dans une architecture de réacteur-échangeur avec un grand nombre de canaux.

Le brevet EP3138628 décrit un réacteur-échangeur de type à plaque présentant un empilement alternatif de nappe de circuit de caloporteur et de nappes de circuit de réactifs. Les éléments des circuits comportant des canaux délimités par des rainures.

Le modèle DE8521746U décrit un réacteur à plaques dont les nappes comportent des canaux avec une section d'écoulement croissante.

Une autre façon de maitriser la température est d'utiliser une forme de canaux telle que la masse de catalyseur soit plus faiblement répartie en entrée des canaux puis augmente le long des canaux. La demande de brevet US 2005/0226793 met en œuvre une telle solution illustrée plus particulièrement sur la figure 2 de ce document. L'inconvénient de cette solution est le manque de compacité, car la masse de catalyseur est réduite localement.

Une architecture de réacteur-échangeur radial permet aussi d'obtenir ce résultat. Une telle architecture est par exemple montrée en figure 3 de la demande de brevet US 2005/0226793. Les réactifs sont introduits par un canal vertical situé au centre du réacteur et s'écoulent radialement, c'est-à-dire perpendiculairement au canal vertical, dans le lit catalytique. Le refroidissement peut être assuré par de tubes verticaux ou par tout autre dispositif. Une limitation de cette architecture est l'absence de modularité, puisqu'il n'est pas possible d'empiler des modules élémentaires comme on pourrait le faire avec un réacteur-échangeur réalisé par empilement de plaques.

Il existe donc un besoin d'améliorer encore les réacteurs-échangeurs de chaleur, notamment afin de mieux contrôler la température en leur sein plus particulièrement lors de réactions catalytiques fortement exothermiques ou endothermiques, sans que cela se fasse au détriment de la compacité des réacteurs, du taux de conversion, de la sélectivité des réactions mises en œuvre, et à des coûts de fabrication et de facilité de mise en œuvre acceptables.

Le but de l'invention est de répondre au moins partiellement à ce besoin.

### Exposé de l'invention

Pour ce faire, l'invention a pour objet un module (M) de réacteur-échangeur de chaleur à au moins deux circuits de fluide, comprenant un empilement qui s'étend selon un axe longitudinal (X) et comprenant les éléments suivants:
- un ou plusieurs éléments formant chacun une nappe d'un des deux circuits de fluide, dit circuit de caloporteur, à l'intérieur duquel un fluide caloporteur est destiné à circuler, chaque élément du circuit de caloporteur comportant des canaux délimités au moins en partie par des rainures réalisées dans au moins une plaque;
- un ou plusieurs éléments formant chacun une nappe de l'autre des deux circuits de fluide, dit circuit de réactifs, à l'intérieur duquel au moins deux réactifs sont destinés à circuler, chaque élément du circuit de réactifs comportant des canaux délimités au moins en partie par des rainures réalisées dans au moins une plaque.

Selon l'invention, les canaux de circuit de réactifs présentent chacun une section d'écoulement croissante sur au moins une partie de leur longueur et en ce que deux canaux de circuit de réactifs adjacents sont réalisés tête-bêche de telle sorte qu'en parcourant un canal dans un sens selon l'axe longitudinal (X), sa section géométrique augmente tandis qu'en parcourant le canal adjacent dans le même sens selon l'axe longitudinal (X) sa section géométrique diminue.

Autrement dit, l'invention consiste essentiellement à définir une géométrie et un agencement relatifs des canaux du circuit des réactifs tels qu'ils soient tous de section croissante le long de l'écoulement des réactifs, mais avec un écoulement dans chaque canal qui a lieu en sens inverse de l'écoulement dans le canal adjacent.

Selon un mode de réalisation avantageux, l'alimentation des réactifs et la collecte et évacuation des produits peuvent être réalisées par des orifices pratiqués sur le dessous et le dessus l'empilement de préférence au centre et alimentant une des nappes de circuit de réactifs en extrémité d'empilement. Selon ce mode, on adjoint sur chaque côté latéral de l'empilement un collecteur/distributeur qui a la double fonction de collecter les produits de réaction provenant de la section la plus grande d'une partie des canaux de réactifs et de distribuer les réactifs dans la section la plus faible de l'autre partie des canaux de réactifs.

Un avantage primordial de l'invention est qu'il devient possible de maximiser le taux de conversion du module de réacteur-échangeur tout en contrôlant la température maximale du réacteur au point le plus chaud, grâce à l'augmentation de la section des canaux réactifs.

En outre, contrairement à certaines solutions selon l'état de l'art, l'obtention d'un taux de conversion maximal allié à un bon contrôle de la température ne se fait pas au détriment de la compacité du réacteur-échangeur selon l'invention puisque l'alternance du sens de l'écoulement entre les canaux adjacents permet de compenser la perte de section et donc de réduire la quantité de matériau constitutif des plaques qui est inutile c'est-à-dire non fonctionnelle pour la réaction chimique visée.

L'absence de matière inutile permet en outre une meilleure tenue à la pression puisque les volumes de fluides sont plus faibles et une plus grande flexibilité de fonctionnement puisque l'inertie thermique est réduite.

De plus, l'invention confère un caractère modulaire aux réacteurs-échangeurs à plaques par la capacité à empiler un nombre variable de nappes, comportant elles-mêmes un nombre variable de canaux.

Avantageusement, la section d'écoulement des canaux de circuit de réactifs est croissante linéairement ou par paliers de section constante.

De préférence, la hauteur de chaque canal de circuit de réactifs est constante.

De préférence,
- la hauteur de chaque canal de circuit de réactifs est de préférence inférieure à 10 mm et de préférence encore, comprise entre 3 et 8 mm ;
- la largeur de chaque canal de circuit de réactifs est inférieure à 50 mm et de préférence comprise entre 3 et 8 mm en entrée des canaux et comprise entre 5 et 40 mm en sortie des canaux.
- le nombre de canaux par nappe du circuit de réactifs est inférieur à 100, de préférence compris entre 5 et 80.

Avantageusement, le nombre de nappes du circuit de réactifs est inférieur à 100, de préférence compris entre 5 et 80.

Selon une variante avantageuse, au moins une partie des nappes du circuit de réactifs est intercalée individuellement au sein de l'empilement entre deux nappes du circuit de caloporteur.

Selon un mode de réalisation avantageux, le module comprend sur le dessus et sur le dessous de l'empilement une nappe de circuit de réactifs percée en son centre d'un orifice d'alimentation des réactifs ou de collecte des produits de réaction, les canaux de ladite nappe communiquant entre eux depuis l'orifice d'alimentation ou de collecte.

Selon ce mode, les canaux débouchent sur les côtés latéraux de l'empilement, le module comprenant un collecteur-distributeur muni intérieurement de chicanes séparant en deux son volume intérieur, chaque collecteur-distributeur étant agencé en bout de chaque côté latéral de l'empilement de telle sorte qu'un des deux volumes séparé par les chicanes alimente en fluide réactifs une partie des canaux dans leur section la plus faible, depuis l'une des nappes du dessous et du dessus et l'autre des volumes collecte les produits de réaction provenant de l'autre partie des canaux dans leur section la plus importante, vers l'autres des nappes du dessous et du dessus.

Les canaux du circuit de caloporteur peuvent être réalisés de sorte à faire circuler le fluide caloporteur à co-courant ou à contre-courant des réactifs.

Chaque nappe de circuit de réactifs est de préférence intercalée entre deux nappes de circuit de caloporteur au moins dans la partie centrale de l'empilement.

Selon un mode de réalisation avantageux, au moins une partie des canaux de réactifs est remplie au moins partiellement d'un catalyseur de conversion sous forme de poudre ou de granulats, ou remplie d'une structure revêtue de catalyseur de conversion.

Selon ce mode, le catalyseur solide de conversion est à base de nickel (Ni) supporté par un oxyde de zirconium (ZrO2), ou à base de nickel (Ni) supporté par un oxyde d'aluminium (Al2O3), ou bimétallique à base de nickel (Ni) et de fer (Fe) supporté par un oxyde d'aluminium (Al2O3), de préférence Ni-Fe/γ- Al2O3, ou à base de nickel (Ni) supporté par des oxydes mixtes de Cérium (Ce) et de zirconium, de préférence Ce0.72Zr0.28O2.

L'invention a également pour objet un système d'échangeur de chaleur comprenant une pluralité de modules de réacteur-échangeur décrits précédemment reliés entre eux, en étant en série ou en parallèle les uns sur les autres et/ou les uns à côté des autres.

L'invention a enfin pour objet l'utilisation d'un module d'échangeur décrit ci-avant ou du système ci-avant pour mettre en œuvre une réaction chimique exothermique ou endothermique, de préférence choisie parmi les réactions de méthanation de CO et/ou de CO2, les réactions de synthèse du méthanol et du diméthyléther (DME), de reformage humide ou à sec du méthane ou d'autres hydrocarbures, d'oxydation, ou encore de Fischer-Tropsch.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue schématique de face d'un élément d'un circuit de fluides réactifs selon une première alternative de l'invention, intégré dans un module de réacteur-échangeur de chaleur à deux circuits de fluide réalisé par empilement de plaques;
- la figure 2 est une vue schématique de face d'un élément d'un circuit de fluides réactifs selon une deuxième alternative de l'invention, intégré dans un module de réacteur-échangeur de chaleur à deux circuits de fluide réalisé par empilement de plaques;
- la figure 3 est une vue en perspective d'un exemple de plaque constitutive d'un élément formant une nappe de distribution ou de collecte du circuit de fluides réactifs selon l'invention ;
- la figure 4 est une vue en perspective d'un exemple de plaque constitutive d'un élément formant une nappe du circuit du fluide caloporteur;
- la figure 5 est une vue en perspective d'un bloc de réacteur-échangeur conforme à l'invention obtenu après empilement alterné et assemblage de nappes du circuit de fluides réactifs selon la figure 3 et de nappes du circuit de caloporteur selon la figure 4 ;
- les figures 6A, 6B et 6C sont des vues en perspective représentant chacune une variante d'un collecteur/distributeur de fluide caloporteur, qui au final est agencé sur l'un des côtés longitudinaux de l'empilement du module sur lequel débouchent les canaux du circuit de fluide caloporteur;
- les figures 7A à 7D sont des vues schématique illustrant les champs de vitesse du fluide caloporteur qui peuvent être atteints selon les variantes de réalisation du collecteur/distributeur;
- la figure 8 est une vue en perspective représentant une variante avantageuse d'un collecteur/distributeur de fluides réactifs, qui au final est agencé sur l'un des côtés latéraux de l'empilement du module sur lequel débouchent les canaux du circuit de fluides réactifs;
- la figure 9 illustre sous forme de courbes comparatives le champ des températures des réactifs que l'on obtient pour une réaction de méthanation, en fonction de la position dans des canaux de fluides réactifs de section constante selon l'état de l'art et dans un canal de fluides réactifs de section croissante selon l'invention ;
- la figure 10 illustre sous forme de courbes comparatives le taux de conversion du réactif CO₂ que l'on obtient pour une réaction de méthanation en fonction de la position dans des canaux de fluides réactifs de section constante selon l'état de l'art et dans un canal de fluides réactifs de section croissante selon l'invention;
- la figure 11 illustre sous forme de courbes comparatives le profil des vitesses d'écoulement de Darcy que l'on obtient pour une réaction de méthanation en fonction de la position dans des canaux de fluides réactifs de section constante selon l'état de l'art et dans un canal de fluides réactifs de section croissante selon l'invention;
- la figure 12 illustre sous forme de courbes comparatives le profil des pressions que l'on obtient pour une réaction de méthanation en fonction de la position dans des canaux de fluides réactifs de section constante selon l'état de l'art et dans un canal de fluides réactifs de section croissante selon l'invention;
- les figures 13 et 14 illustrent sous forme de courbes comparatives le profil du flux molaire respectivement du réactif CO₂ et du méthane CH4 produit, que l'on obtient pour une réaction de méthanation en fonction de la position dans des canaux de fluides réactifs de section constante selon l'état de l'art et dans un canal de fluides réactifs de section croissante selon l'invention;

Dans l'ensemble de la demande, et en particulier dans la description détaillée qui va suivre, les termes « longitudinal » et « latéral » sont à considérer en relation avec la forme géométrique des plaques métalliques qui déterminent la forme géométrique de l'empilement du module réacteur-échangeur thermique selon l'invention. Ainsi, au final les quatre côtés longitudinaux de l'empilement du module d'échangeur selon l'invention sont ceux qui s'étendent parallèlement à l'axe X longitudinal du module, c'est-à-dire selon la longueur L des plaques. Les deux côtés latéraux de l'empilement sont ceux qui s'étendent selon l'axe Y latéral du module, orthogonalement à l'axe X, c'est-à-dire selon la largeur 1 des plaques.

Les termes « inférieur » et « supérieur » signifient le dessous respectivement de l'empilement constituant le module de réacteur-échangeur selon l'invention.

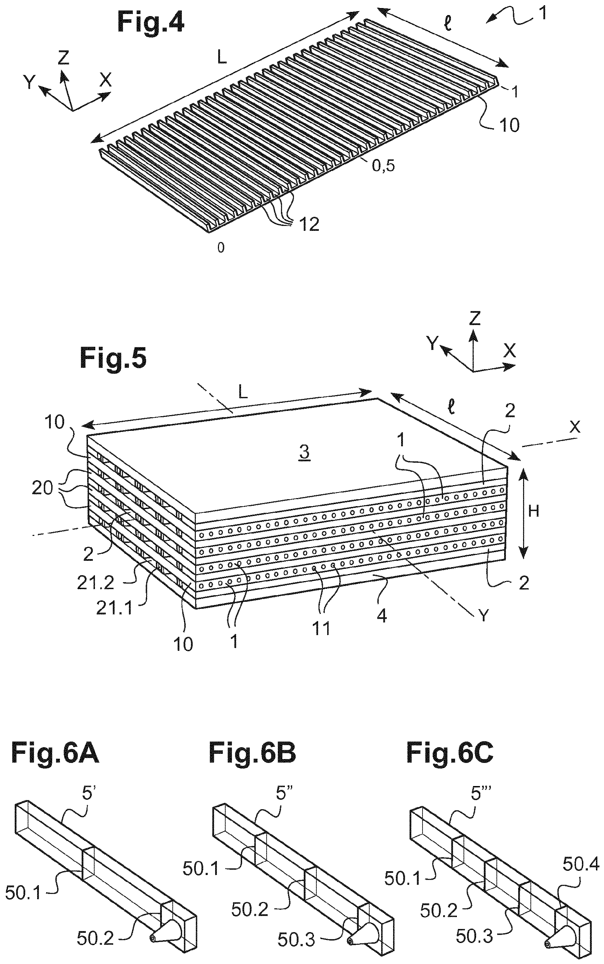

Un module de réacteur-échangeur à deux circuits de fluides selon l'invention est montré en figure 5.

Ce module est constitué d'un bloc comprenant en son sein des canaux 21 parallèles entre eux, répartis en plusieurs nappes 2 parallèles entre elles et au sein desquels des fluides de réactifs peuvent circuler.

Selon l'invention, la section des canaux 21 est croissante le long de l'axe longitudinal X du module et deux canaux adjacents 21 sont réalisés tête-bêche de sorte que qu'en parcourant un canal 21.1 dans un sens selon l'axe longitudinal X, sa section géométrique augmente tandis qu'en parcourant le canal adjacent 21.2 dans le même sens selon l'axe longitudinal X sa section géométrique diminue.

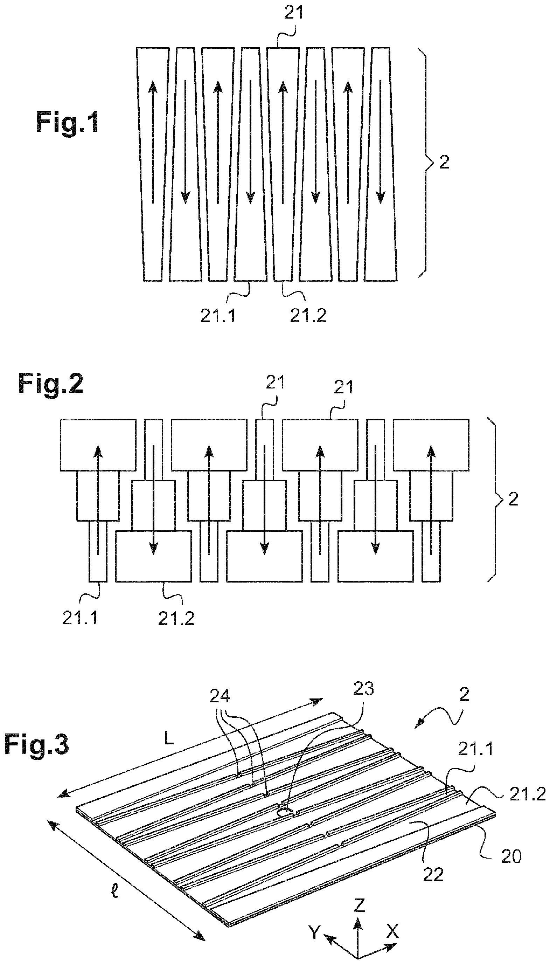

Ainsi, comme illustré en figures 1 et 2 au moyen des flèches, la section d'écoulement des fluides réactifs dans chaque canal 21 est croissante et dans chaque canal 21 l'écoulement a lieu en sens inverse de celui dans le canal 21 adjacent.

Selon une variante de réalisation, la section peut augmenter linéairement comme montré en figure 1.

Elle peut aussi augmenter de manière non linéaire. Cette augmentation de section peut ainsi se faire par paliers constants comme montré en figure 2 pour atteindre en sortie de canal une dimension plus grande.

A titre d'exemple illustratif, quelle que soit la variante d'augmentation de section, celle-ci peut être égale à 4 mm x 4 mm en entrée de canal et être égale à 15 mm x 4 mm en sortie de canal.

De préférence, afin de pouvoir fabriquer les canaux par découpe dans des plaques d'épaisseur constante, l'augmentation de section est réalisée uniquement sur la largeur des canaux.

La figure 3 montre une plaque métallique 20 d'épaisseur constante constituant au moins une partie d'une nappe 2 intégrant les canaux 21, 21.1, 21.2 de fluides réactifs selon l'invention, constitués par les rainures 22 de largeur croissante sur la longueur de la plaque 20. Comme expliqué ci-après, la plaque 20 montrée constitue une plaque de dessus ou du dessous de l'empilement du module. Cette plaque 20 est ainsi percée d'un orifice central 23 par lequel les fluides réactifs peuvent être alimentés ou les produits de réaction évacués. Des gorges 24 réalisées sur les parois séparant les canaux 21 permettent l'amenée des fluides réactifs ou la collecte des produits de réaction dans chacun d'entre eux.

La figure 4 montre une plaque métallique 10 d'épaisseur constante constituant au moins une partie d'une nappe 1 intégrant les canaux 11 de fluide caloporteur, constitués par les rainures 12 parallèles entre elles, de largeur constante sur la largeur de la plaque 10. Dans cet exemple illustré en figure 4, les rainures 12 et donc les canaux 11 sont de section rectangulaire. On peut aussi prévoir des canaux 11 de circulation de caloporteur de section ronde, carrée, ou selon tout autre profil.

Un module de réacteur-échangeur selon l'invention, tel que montré en figure 5 peut être obtenu par l'une des méthodes connues de l'homme de l'art telles que l'assemblage par soudage notamment diffusion, vissage ou brasage des plaques 10, 20 usinées.

La géométrie du module de réacteur-échangeur décrite se prête particulièrement bien à la réalisation par assemblage de plaques.

Un mode d'obtention des canaux privilégié est le rainurage par usinage de ces canaux dans les plaques. Cela peut se faire par enlèvement de matière mécanique, par gravure laser ou par usinage chimique.

Les rainures 12, 22 des canaux 11, 21 respectivement de fluides réactifs ou de fluide caloporteur peuvent être débouchantes sur l'extérieur comme illustré en figures 3, 4 et 8 ou non.

On décrit maintenant un exemple avantageux de réalisation du module M représenté en figure 5.

Afin de réaliser un élément 1 d'un circuit de fluide caloporteur, on usine dans une plaque métallique 1 de formes rectangulaires L^{∗}l, des rainures 12 droites, identiques et parallèles entre elles selon la largeur de plaque. Ces rainures 12 sont illustrées en figure 4.

Afin de réaliser un élément 2 d'un circuit de fluides réactifs, on usine dans une plaque métallique 2 de formes rectangulaires L^{∗}l, identiques entre elles, des rainures 22 de section croissante selon la longueur de la plaque 2. Ces rainures 22 sont réalisées tête-bêche de telle sorte qu'en parcourant un canal 21.1 dans un sens selon la longueur de la plaque 20, sa section géométrique augmente tandis qu'en parcourant le canal adjacent 21.2 dans le même sens selon la longueur de la plaque sa section géométrique diminue. Ces rainures 22 sont illustrées en figure 3.

Les canaux du circuit 2 de fluides réactifs et du circuit 1 de fluide caloporteur sont réalisés à la fois (en même temps) par empilement successif de plaques.
- une plaque pleine inférieure 4 dite de fermeture, percée d'un orifice central d'alimentation non représenté d'alimentation des fluides réactifs ou d'évacuation des produits de réaction;
- une plaque 20 de distribution des fluides réactifs ou des produits de réaction gravée des canaux de distribution comme illustrée en figure 3 ;
- une plaque pleine intermédiaire de séparation non détaillée ;
- un empilement successif d'une plaque de refroidissement 10 usinée des canaux de caloporteurs 11, une plaque pleine intermédiaire de séparation, une plaque 20 de circulation des fluides réactifs gravée des canaux réactifs 21 de section croissante, une plaque pleine intermédiaire de séparation et une plaque 20 de distribution usinée des canaux de distribution des fluides réactifs ou des produits de réaction
- une plaque pleine supérieure 3 dite de fermeture, percée d'un orifice central non représenté d'alimentation des fluides réactifs ou d'évacuation des produits de réaction.

Les plaques rainurées 10, 20 et leur agencement relatif peuvent être réalisés de sorte que les nappes 2 de canaux 21 des réactifs alternent individuellement avec les nappes 1 de canaux 11 de caloporteur au moins au centre de l'empilement et que l'écoulement des fluides réactifs dans les canaux 21 soit à contre-courant, à co-courant, à courant-croisés ou encore globalement co-courant ou contre-courant et localement à courant-croisés avec l'écoulement du caloporteur dans les canaux 11.

Lorsque l'ensemble des plaques a été empilé, elles peuvent être assemblées entre-elles par une des méthodes connues de l'homme de l'art, par exemple par soudage-diffusion par compression ou compaction isostatique à chaud (CIC), par compression uniaxiale à chaud (CUC), par brasage, par soudage TIG, soudage laser ou soudage par faisceau d'électrons.

L'assemblage par soudage-diffusion par compression isostatique à chaud (CIC), est privilégié parce qu'il permet d'assurer le soudage autour de chaque canal avec une excellente qualité métallurgique puisqu'il ne crée pas de zone affectée thermiquement ni de zone fondue. Il en résulte une bonne étanchéité et une excellente tenue à la pression, ce qui est un critère important lorsque sont utilisés des fluides dangereux et sous pression. La technique de compression isostatique à chaud (CIC), y compris ses étapes de réalisation, est bien connue de l'état de la technique.

Lorsque la méthode d'assemblage ne permet pas de souder toutes les plaques d'un seul tenant, par exemple lorsqu'un soudage TIG est utilisé, l'assemblage par parties est aussi possible.

Dans notre cas, l'empilement est soumis à au moins un cycle de compression isostatique à chaud (CIC). La technique de compression isostatique à chaud (CIC), y compris ses étapes de réalisation, est bien connue de l'état de la technique. On pourra se reporter avantageusement à la publication [1].

De préférence dans le cas d'acier inoxydable, le cycle de CIC est réalisé :
- à une pression comprise entre 20 et 500 bar,
- à une température comprise entre 500 et 1200°C,
- pendant une durée comprise entre 15 min et quelques heures

On obtient ainsi un bloc préassemblé formant un module de réacteur-échangeur selon l'invention comme illustré en figure 5, que l'on peut aisément contrôler par d'autres diagnostics techniques comme les ultrasons ou la radiographie.

A la fin du cycle de CIC, les canaux sont usinés afin d'ouvrir les rainures (canaux), puis on soumet éventuellement l'empilement à un autre cycle de compression isostatique à chaud (CIC). Cet autre cycle est effectué pour parfaire le soudage et éliminer éventuellement la porosité résiduelle.

A l'issue des cycles de CIC, le module réacteur-échangeur est usiné afin de permettre la mise en place des collecteurs de gaz et de caloporteur et de l'instrumentation, comprenant notamment des thermocouples et des capteurs de prélèvements par capillaire.

A ce stade, le cas échéant, si la réaction à mettre en œuvre est catalytique, les canaux 21 de circuit de réactifs sont remplis au moyen de catalyseur en grains ou sous forme de poudre ou alors sous forme d'une structure telle qu'une mousse métallique, une céramique, un nid d'abeille, un métal déployé,....revêtue de catalyseur.

La taille des grains du catalyseur est choisie de façon à réduire les limites de diffusion des fluides réactifs dans les grains de catalyseur, dans la limite des pertes de charges admissibles. Il est connu que la dimension des grains de catalyseurs doit être suffisamment petite par rapport aux dimensions du canal, typiquement un rapport de 1/20 est généralement préconisé. Pour limiter les pertes de charges, un rapport de 1/10 seulement peut être utilisé en conservant de très bonnes performances.

Le catalyseur est choisi selon l'application visée. Avantageusement, pour une réaction de méthanation, le catalyseur est constitué de particules d'alumine gamma sur lesquelles sont dispersées des cristallites de nickel de taille nanométrique.

Lorsque la réaction à mettre en œuvre au sein d'un module selon l'invention est une réaction homogène, il n'y a pas lieu de remplir les canaux 21 avec un catalyseur.

Enfin sur chacun des deux côtés longitudinaux de l'empilement, un collecteur/distributeur de fluide caloporteur est rapporté.

Les figures 6A à 6C, illustrent un mode de réalisation avantageux de collecteur/distributeur 5', 5", 5'" de fluide caloporteur comprenant respectivement un nombre de deux, trois ou quatre parois internes 50.1 à 50.4 et capable de faire un fluide de refroidissement/réchauffement globalement à co-courant ou contre-courant et localement à courant-croisés de l'écoulement des fluides réactifs.

En combinant deux à deux ces collecteurs/distributeurs 5, 5', 5", 5'", il est possible d'obtenir de nombreuses configurations, où le nombre de passages et la vitesse de caloporteur peuvent être adaptés au débit et à la puissance de pompe de circulation disponible.

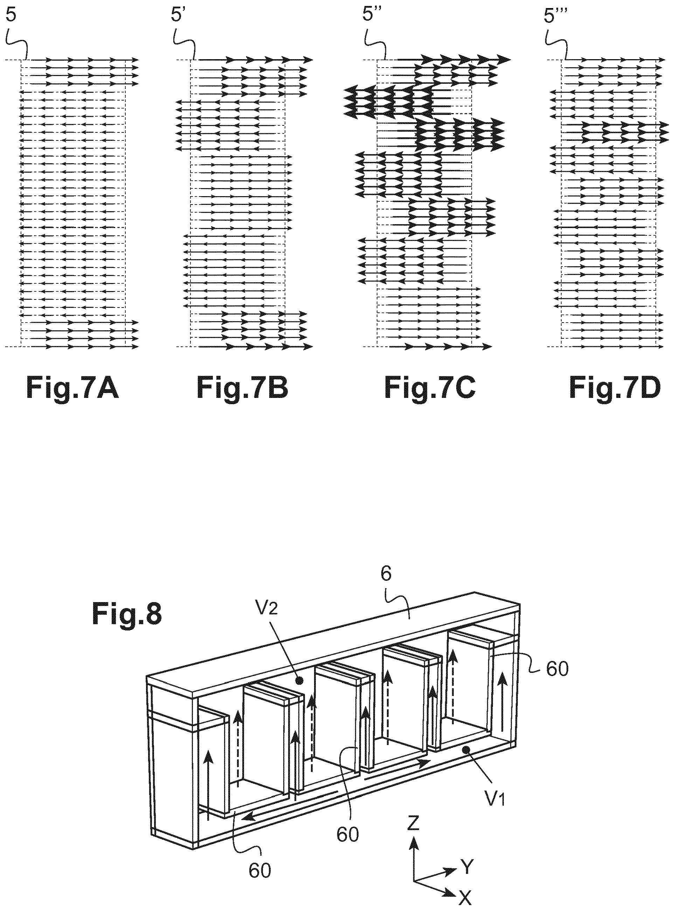

Les figures 7A à 7D montrent l'orientation des champs de vitesse obtenue pour un collecteur et un distributeur 5, 5', 5", 5'" comprenant respectivement un nombre d'une, deux, trois ou quatre parois internes.

On procède de manière analogue pour les collecteurs/distributeurs 6 dont un mode de réalisation avantageux est représenté en figure 8.

Ainsi sur chaque côté latéral, i.e. en bout d'empilement, un collecteur/distributeur 6 de fluides réactifs comme montré en figure 8 est assemblé de manière étanche au bloc de sorte à alimenter et/ou récupérer les fluides réactifs dans chacun des canaux 21, 21.1, 21.1 du circuit de réactifs au niveau des extrémités des rainures 22.

Avec un tel collecteur/distributeur 6, les fluides réactifs arrivent par l'orifice central de la nappe 2 de distribution inférieure et s'écoulent dans les deux directions opposées pour arriver aux deux distributeurs/collecteurs 6.

Chaque distributeur/collecteur 6 comporte une paroi 60 formant des chicanes qui permettent d'assurer simultanément les deux fonctions de distribution des réactifs et de collecte des produits de réaction.

Comme symbolisé par les flèches en figure 8, les fluides réactifs sont alimentés dans la partie inférieure du distributeur/collecteur 6 par la nappe 2 de distribution inférieure et est distribué vers chaque canal réactif (flèches en traits pleins) alors que les produits de réaction arrivent par les sorties de chaque canal réactif 2 puis sont collectés par la nappe 2 de distribution supérieure (flèches en pointillés).

Les distributeurs et les collecteurs de refroidissement comme celui montré en figures 6A à 6C ainsi que les collecteurs/distributeurs réactifs comme celui montré en figure 8 peuvent être usinés dans la masse ou assemblés par construction mécano-soudée.

L'assemblage avec étanchéité entre les collecteurs/distributeurs et le bloc du réacteur peut être fait par des joints de section plate ou torique, connus de l'homme de l'art ou par soudage si le démontage ultérieur n'est pas nécessaire.

Selon le nombre de parois internes en place, le circuit caloporteur aura une longueur développée et une section de passage plus ou moins grandes. Ces caractéristiques peuvent être modifiées par le simple remplacement du collecteur en fonction des applications visées et des capacités du groupe de refroidissement. En réduisant la section de passage offerte à chaque passe du caloporteur, la vitesse du caloporteur augmente proportionnellement conduisant à une augmentation de l'échange thermique au prix d'une perte de charge plus élevée.

Les avantages procurés par les canaux 21 de fluides réactifs de section croissante mais tête-bêche d'un canal 21.1 à celui adjacent 21.2 selon l'invention, sont principalement une bonne maîtrise de la température des fluides réactifs au contact des catalyseurs en conservant une productivité (taux de conversion) élevée et ce, avec une bonne compacité du module de réacteur-échangeur.

Afin de bien mettre en évidence, l'inventeur a procédé à des simulations numériques comparatives pour une réaction de méthanation du CO₂ selon l'équation suivante:

CO₂+4H₂→ CH₄ +2H₂O

Les simulations comparatives ont été faites, à l'aide du logiciel, commercialisé sous la dénomination « COMSOL Multiphysics », sur un canal 20 de circuit de fluides réactifs de longueur 200 mm contenant un catalyseur de nickel-alumine sous forme de grains de 500 µm et alimenté par un mélange de réactif de composition molaire 80% H₂ et 20% CO₂, à une température de 290°C sous une pression de 2 bar et à un débit de 0,5 NL/min.

Le refroidissement par les canaux 11 de caloporteur est modélisé par un coefficient d'échange de 500 W/m²/K entre les grains de catalyseurs et la paroi des plaques 10 et une température extérieure fixée à 290°C.

Les simulations comparatives ont été faites sur trois géométries de canal de circuit de réactifs différentes dont deux à section constante selon l'état de l'art et une à section croissante selon l'invention.

Ainsi, la première géométrie de canal est constituée d'un canal de section constante de 7 mm², la seconde d'un canal de section constante de 28 mm² et la troisième d'un canal selon l'invention avec une section qui varie linéairement entre 7 mm² en entrée et 50 mm² en sortie.

Les paramètres principaux qui caractérisent l'avancement de la réaction et le comportement thermique sont mesurés selon un axe parallèle à la direction principale du canal et placé en son centre.

Les paramètres simulés sont respectivement la température, le taux de conversion du CO₂, la vitesse d'écoulement de Darcy, la pression, le flux molaire de réactif CO₂, et le flux molaire de CH₄ produit.

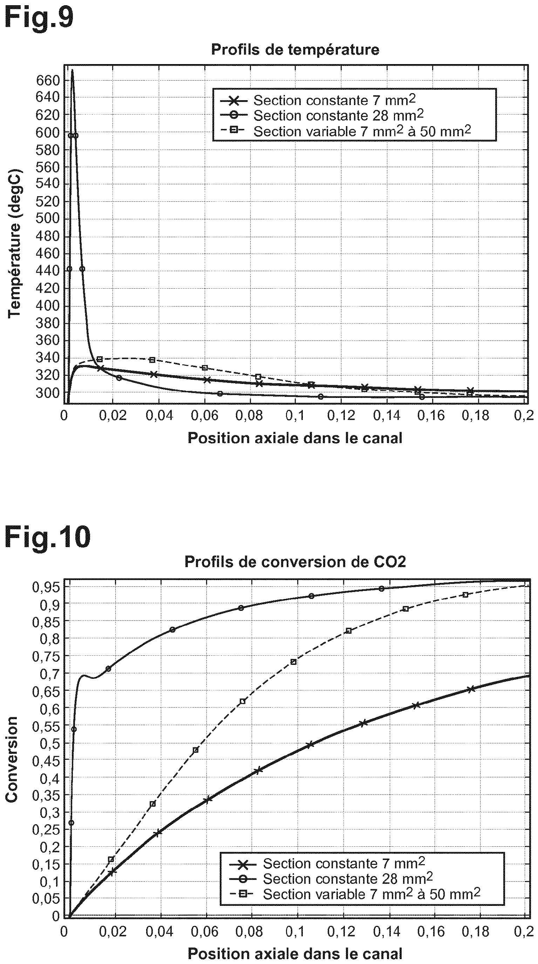

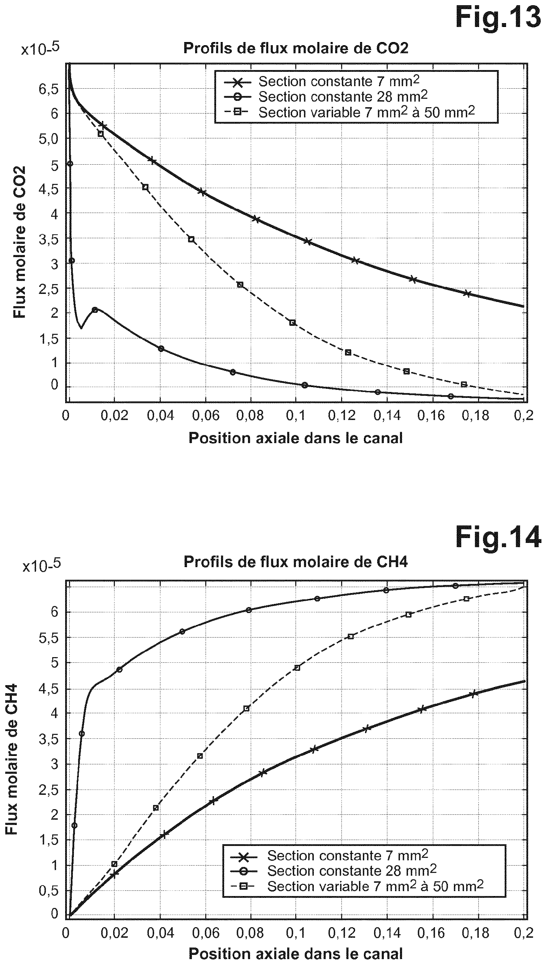

Les résultats de ces simulations sur ces paramètres sont illustrés sous forme de courbes respectivement aux figures 9, 10, 11, 12, 13 et 14.

Il ressort de la figure 10 que le canal de section constante de 28 mm² selon l'état de l'art fournit le taux de conversion de CO₂ le plus élevé, de l'ordre de 95%. Cependant, ce taux de conversion n'est obtenu qu'au prix d'une très forte élévation de la température comme cela ressort de la figure 9 où la température en entrée du canal peut atteindre plus de 660°C, ce qui impliquerait un vieillissement prématuré du catalyseur.

Une solution possible pour réduire cette élévation de la température est de considérer des canaux de section plus faible, afin de limiter localement la quantité de catalyseur et la distance de diffusion de la chaleur. La simulation réalisée sur le canal de section constante égale à 7 mm² selon l'état de l'art le prouve puisque la réduction de température obtenue dans un tel canal est très nette avec une température maximale ne dépassant pas 340°C dans l'exemple illustré en figure 9.

En revanche, on constate qu'un tel canal de section très réduite a un effet néfaste sur le taux de conversion de CO₂ et sur le flux molaire de CH₄ en sortie du canal. En effet, comme illustré en figure 10, la conversion chute de 95% pour un canal de section constante à 28mm² à 70% pour un canal de section constante à 7mm².

La mise en œuvre de canaux de réactifs à section croissante selon l'invention apporte une très nette amélioration par rapport aux canaux de section constante selon l'état de l'art. En effet, on constate que pour un canal de réactifs dont la section croit linéairement de 7 mm² en entrée du réacteur à 28 mm² en sortie, la température maximale est contrôlée puisqu'elle ne dépasse pas 340°C comme illustré en figure 9 et ce sans que cela se fasse au détriment du taux de conversion puisque comme montré en figure 10, il reste de l'ordre 93%.

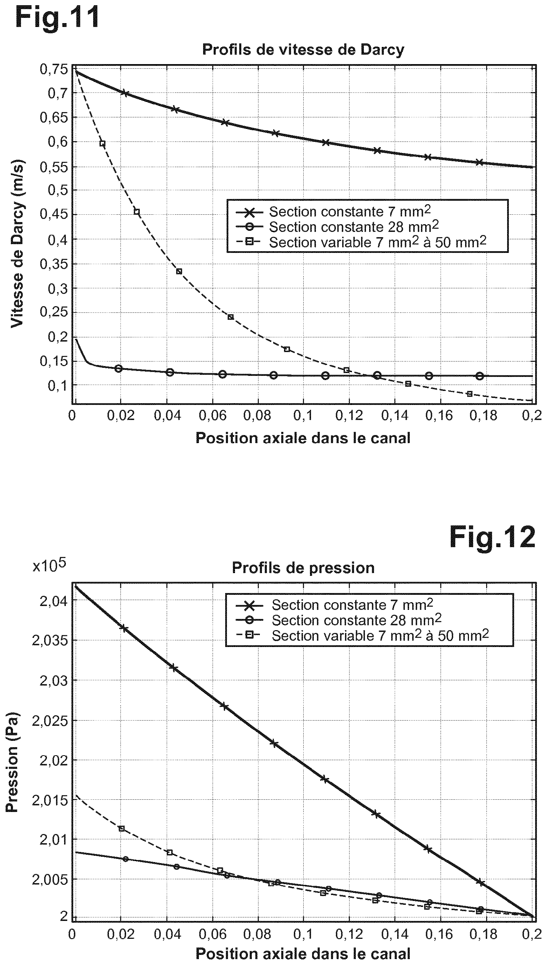

A la vue de la figure 12, on constate en outre que les pertes de charges sont aussi fortement réduites dans le canal à section croissante selon l'invention par rapport au canal à section constante de 7 mm² selon l'état de l'art.

Un autre avantage subséquent lié aux canaux de réactifs à section croissante selon l'invention concerne le remplissage du catalyseur, qui est d'autant plus simple à effectuer que la largeur du canal est grande et que le nombre de canaux à remplir est réduit. Ainsi, le nombre de canaux à remplir est environ deux fois plus petit pour un réacteur à canaux à section croissante de 7 mm² à 28 mm² selon l'invention que pour un réacteur à canaux de section constante de 7 mm² selon l'état de l'art. Le risque d'un remplissage hétérogène des canaux pouvant conduire à des mauvaises distributions de débit entre canaux est donc plus réduit, par rapport aux canaux selon l'état de l'art.

Bien entendu, la présente invention n'est pas limitée aux variantes et aux modes de réalisation décrits fournis à titre d'exemples illustratifs et non limitatifs.

Les canaux de réactifs peuvent également présenter une géométrie autre qu'un motif droit comme montré en figure 1 tout étant de forme allongée.

De manière générale, la géométrie et la taille des canaux, le nombre de canaux par nappe et le nombre de nappes pour chacun des circuits de fluide peuvent être différents selon la nature et les propriétés des fluides à véhiculer, les pertes de charges admissibles et le débit souhaité. On peut empiler plusieurs éléments du même circuit dans le but d'optimiser une fonctionnalité du réacteur-échangeur selon l'invention, par exemple l'échange thermique ou le débit d'un des fluides.

Dans l'exemple illustré, et pour une application particulière à la mise en œuvre d'une réaction fortement exothermique telle qu'une réaction de méthanation, les géométries préférées des canaux réactifs sont celles permettant de garder une hauteur constante et avec une largeur qui augmente linéairement ou selon une autre loi. Par exemple, la hauteur des canaux peut être inférieure à 10 mm et plus particulièrement, comprise entre 3 et 8 mm. La largeur des canaux peut être inférieure à 50 mm et plus particulièrement varier de 3 à 8 mm en entrée du réacteur et de 5 à 40 mm en sortie.

Le nombre de canaux par nappe peut être adapté au débit de réactifs à traiter. Il est de préférence inférieur à 100 et de préférence compris entre 5 et 80.

Le nombre de nappes de circuit réactif peut aussi être adapté au débit de réactifs à traiter. Il est de préférence inférieur à 100 et de préférence compris entre 5 et 80.

Le nombre de nappes de fluide de caloporteur dépend du nombre de nappes du circuit de réactifs. Pour un refroidissement optimal, dans le cas d'une réaction fortement exothermique ou endothermique, il est préféré de mettre en place une nappe de circuit de caloporteur de part et d'autre de chaque nappe de réactifs au moins au centre de l'empilement comme dans l'exemple illustré en figure 5.

Si l'exemple illustré concerne des échangeurs à exactement deux circuits de fluides, il est tout à fait possible de fabriquer un échangeur à trois circuits de fluides ou plus.

Un réacteur-échangeur selon l'invention qui vient d'être décrit est particulièrement adapté à la mise en œuvre de réactions fortement exothermiques ou endothermiques. Parmi ces réactions, on peut citer tout particulièrement les réactions de méthanation de CO et/ou de CO₂, les réactions de synthèse du méthanol et du diméthyléther (DME), de reformage humide ou à sec du méthane ou d'autres hydrocarbures, d'oxydation, ou encore de synthèse Fischer-Tropsch.

### REFERENCE CITEE

[1]: Ala Zouaghi, «Étude de la compaction isostatique à chaud de l'acier inox 316L: Modélisation numérique à l'échelle mésoscopique et caractérisation expérimentale », Ecole Nationale Supérieure des Mines de Paris, 2013

## Revendications

1. Module (M) de réacteur-échangeur de chaleur à au moins deux circuits de fluide, comprenant un empilement qui s'étend selon un axe longitudinal (X) et comprenant les éléments suivants:
- un ou plusieurs éléments (1) formant chacun une nappe d'un des deux circuits de fluide, dit circuit de caloporteur, à l'intérieur duquel un fluide caloporteur est destiné à circuler, chaque élément du circuit de caloporteur comportant des canaux (11) délimités au moins en partie par des rainures (12) réalisées dans au moins une plaque (10);
- un ou plusieurs éléments (2) formant chacun une nappe de l'autre des deux circuits de fluide, dit circuit de réactifs, à l'intérieur duquel au moins deux réactifs sont destinés à circuler, chaque élément du circuit de réactifs comportant des canaux (21) délimités au moins en partie par des rainures (22) réalisées dans au moins une plaque (20);
caractérisé en que les canaux (21) de circuit de réactifs présentent chacun une section d'écoulement croissante sur au moins une partie de leur longueur et en ce que deux canaux de circuit de réactifs adjacents (21.1, 21.2) sont réalisés tête-bêche de telle sorte qu'en parcourant un canal (21.1) dans un sens selon l'axe longitudinal (X), sa section géométrique augmente tandis qu'en parcourant le canal adjacent (21.2) dans le même sens selon l'axe longitudinal (X) sa section géométrique diminue.

2. Module de réacteur-échangeur selon la revendication 1, dans lequel la section d'écoulement des canaux (21) de circuit de réactifs est croissante linéairement ou par paliers de section constante.

3. Module de réacteur-échangeur selon la revendication 1 ou 2, dans lequel la hauteur de chaque canal (21) de circuit de réactifs est constante.

4. Module de réacteur-échangeur selon l'une quelconque des revendications précédentes dans lequel la hauteur de chaque canal (21) de circuit de réactifs est inférieure à 10 mm et de préférence, comprise entre 3 et 8 mm.

5. Module de réacteur-échangeur selon l'une quelconque des revendications précédentes, dans lequel la largeur de chaque canal (21) de circuit de réactifs est inférieure à 50 mm et de préférence comprise entre 3 et 8 mm en entrée des canaux et comprise entre 5 et 40 mm en sortie des canaux.

6. Module de réacteur-échangeur selon l'une quelconque des revendications précédentes dans lequel le nombre de canaux (21) par nappe (2) du circuit de réactifs est inférieur à 100, de préférence compris entre 5 et 80.

7. Module de réacteur-échangeur selon l'une quelconque des revendications précédentes dans lequel le nombre de nappes (2) du circuit de réactifs est inférieur à 100, de préférence compris entre 5 et 80.

8. Module de réacteur-échangeur selon l'une quelconque des revendications précédentes, dans lequel au moins une partie des nappes du circuit de réactifs est intercalée individuellement au sein de l'empilement entre deux nappes du circuit de caloporteur.

9. Module de réacteur-échangeur selon l'une quelconque des revendications précédentes, comprenant sur le dessus et sur le dessous de l'empilement une nappe de circuit de réactifs percée en son centre d'un orifice d'alimentation des réactifs ou de collecte des produits de réaction, les canaux de ladite nappe communiquant entre eux depuis l'orifice d'alimentation ou de collecte.

10. Module de réacteur-échangeur selon la revendication 9 les canaux débouchant sur les côtés latéraux de l'empilement, le module comprenant un collecteur-distributeur muni intérieurement de chicanes séparant en deux son volume intérieur, chaque collecteur-distributeur étant agencé en bout de chaque côté latéral de l'empilement de telle sorte qu'un des deux volumes séparé par les chicanes alimente en fluide réactifs une partie des canaux dans leur section la plus faible, depuis l'une des nappes du dessous et du dessus et l'autre des volumes collecte les produits de réaction provenant de l'autre partie des canaux dans leur section la plus importante, vers l'autres des nappes du dessous et du dessus.

11. Module de réacteur-échangeur selon l'une quelconque des revendications précédentes, dans lequel les canaux du circuit de caloporteur sont réalisés de sorte à faire circuler le fluide caloporteur à co-courant ou à contre-courant des réactifs.

12. Module de réacteur-échangeur selon l'une quelconque des revendications précédentes, dans lequel chaque nappe de circuit de réactifs est intercalée entre deux nappes de circuit de caloporteur au moins dans la partie centrale de l'empilement.

13. Module de réacteur-échangeur selon l'une quelconque des revendications précédentes dans lequel au moins une partie des canaux de réactifs est remplie au moins partiellement d'un catalyseur de conversion sous forme de poudre ou de granulats, ou remplie d'une structure revêtue de catalyseur de conversion.

14. Module de réacteur-échangeur selon la revendication 13 dans lequel le catalyseur solide de conversion est à base de nickel (Ni) supporté par un oxyde de zirconium (ZrO2), ou à base de nickel (Ni) supporté par un oxyde d'aluminium (Al₂O₃), ou bimétallique à base de nickel (Ni) et de fer (Fe) supporté par un oxyde d'aluminium (Al₂O₃), de préférence Ni-Fe/γ- Al₂O₃, ou à base de nickel (Ni) supporté par des oxydes mixtes de Cérium (Ce) et de zirconium, de préférence Ce_{0.72}Zr_{0.28}O₂.

15. Système d'échangeur de chaleur comprenant une pluralité de modules de réacteur-échangeur selon l'une quelconque des revendications précédentes reliés entre eux, en étant en série ou en parallèle, avec une disposition les uns sur les autres et/ou les uns à côté des autres.

16. Utilisation d'un module d'échangeur selon l'une quelconque des revendications 1 à 14 ou du système selon la revendication 15 pour mettre en œuvre une réaction chimique exothermique ou endothermique, de préférence choisie parmi les réactions de méthanation de CO et/ou de CO₂, les réactions de synthèse du méthanol et du diméthyléther (DME), de reformage humide ou à sec du méthane ou d'autres hydrocarbures, d'oxydation, ou encore de Fischer-Tropsch.

## Patentansprüche

1. Reaktor-Wärmetauschermodul (M) mit mindestens zwei Fluidkreisläufen, umfassend eine Stapelung, die sich gemäß einer Längsachse (X) erstreckt und die folgenden Elemente umfasst:
- ein oder mehrere Elemente (1), die jeweils eine Bahn von einem der zwei Fluidkreisläufe, bezeichnet als Wärmeträgerfluidkreis, bilden, in dessen Inneren ein Wärmeträgerfluid bestimmt ist zu zirkulieren, wobei jedes Element des Wärmeträgerkreises Kanäle (11) aufweist, die mindestens teilweise durch Rillen (12) begrenzt sind, die in mindestens einer Platte (10) ausgebildet sind;
- ein oder mehrere Elemente (2), die jeweils eine Bahn des anderen der zwei Fluidkreisläufe, bezeichnet als Reagenzkreis, bilden, in dessen Inneren mindestens zwei Reagenzien bestimmt sind zu zirkulieren, wobei jedes Element des Reagenzkreises Kanäle (21) aufweist, die mindestens teilweise durch Rillen (22) begrenzt sind, die in mindestens einer Platte (20) ausgebildet sind;
**dadurch gekennzeichnet, dass** die Reagenzkreis-Kanäle (21) jeweils einen zunehmenden Fließquerschnitt über mindestens einen Teil ihrer Länge aufweisen und dass zwei benachbarte Reagenzkreis-Kanäle (21.1, 21.2) Kopf an Fuß derart ausgebildet sind, dass beim Durchlaufen eines Kanals (21.1) in einer Richtung gemäß der Längsachse (X) sein geometrischer Querschnitt zunimmt, wohingegen beim Durchlaufen des benachbarten Kanals (21.2) in derselben Richtung gemäß der Längsachse (X) sein geometrischer Querschnitt abnimmt.

2. Reaktor-Wärmetauschermodul nach Anspruch 1, wobei der Fließquerschnitt der Reagenzkreis-Kanäle (21) linear oder in Stufen mit konstantem Querschnitt zunimmt.

3. Reaktor-Wärmetauschermodul nach Anspruch 1 oder 2, wobei die Höhe jedes Reagenzkreis-Kanals (21) konstant ist.

4. Reaktor-Wärmetauschermodul nach einem der vorangehenden Ansprüche, wobei die Höhe jedes Reagenzkreis-Kanals (21) unter 10 mm beträgt und vorzugsweise zwischen 3 und 8 mm liegt.

5. Reaktor-Wärmetauschermodul nach einem der vorangehenden Ansprüche, wobei die Breite jedes Reagenzkreis-Kanals (21) unter 50 mm beträgt und vorzugsweise zwischen 3 und 8 mm am Eingang der Kanäle liegt und zwischen 5 und 40 mm am Ausgang der Kanäle liegt.

6. Reaktor-Wärmetauschermodul nach einem der vorangehenden Ansprüche, wobei die Anzahl der Kanäle (21) je Bahn (2) des Reagenzkreises unter 100 beträgt, vorzugsweise zwischen 5 und 80 liegt.

7. Reaktor-Wärmetauschermodul nach einem der vorangehenden Ansprüche, wobei die Anzahl von Bahnen (2) des Reagenzkreises unter 100 beträgt, vorzugsweise zwischen 5 und 80 liegt.

8. Reaktor-Wärmetauschermodul nach einem der vorangehenden Ansprüche, wobei mindestens ein Teil der Bahnen des Reagenzkreises individuell innerhalb der Stapelung zwischen zwei Bahnen des Wärmeträgerkreises angeordnet ist.

9. Reaktor-Wärmetauschermodul nach einem der vorangehenden Ansprüche, umfassend auf der Oberseite und auf der Unterseite der Stapelung eine Reagenzkreisbahn, die in ihrem Zentrum von einer Öffnung zur Versorgung mit Reagenzien oder zum Sammeln der Reaktionsprodukte durchbrochen ist, wobei die Kanäle der Bahn ab der Versorgungs- oder Sammelöffnung miteinander kommunizieren.

10. Reaktor-Wärmetauschermodul nach Anspruch 9, wobei die Kanäle auf den seitlichen Seiten der Stapelung ausmünden, wobei das Modul einen Sammler-Verteiler umfasst, der innen mit Leitblechen ausgestattet ist, die sein Innenvolumen zweiteilen, wobei jeder Sammler-Verteiler am Ende jeder seitlichen Seite der Stapelung derart eingerichtet ist, dass eins der zwei durch die Leitbleche getrennten Volumen einen Teil der Kanäle bei ihrem kleinsten Querschnitt ab einer der Bahnen auf der Unterseite und der Oberseite mit Reagenzfluid versorgt und das andere der Volumen die Reaktionsprodukte sammelt, die von dem anderen Teil der Kanäle bei ihrem größten Querschnitt zu anderen Bahnen auf der Unterseite und der Oberseite kommen.

11. Reaktor-Wärmetauschermodul nach einem der vorangehenden Ansprüche, wobei die Kanäle des Wärmeträgerkreises derart ausgebildet sind, dass das Wärmeträgerfluid im Gleichstrom oder im Gegenstrom der Reagenzien fließt.

12. Reaktor-Wärmetauschermodul nach einem der vorangehenden Ansprüche, wobei jede Reagenzkreisbahn mindestens im zentralen Teil der Stapelung zwischen zwei Wärmeträgerkreisbahnen angeordnet ist.

13. Reaktor-Wärmetauschermodul nach einem der vorangehenden Ansprüche, wobei mindestens ein Teil der Reagenzkanäle mindestens teilweise mit einem Umwandlungskatalysator in Form von Pulver oder von Granulaten gefüllt ist oder mit einer Struktur gefüllt ist, die mit Umwandlungskatalysator beschichtet ist.

14. Reaktor-Wärmetauschermodul nach Anspruch 13, wobei der feste Umwandlungskatalysator auf der Basis von Nickel (Ni) ist, auf ein Zirkoniumoxid (ZrO2) als Träger aufgezogen, oder auf der Basis von Nickel (Ni), auf ein Aluminiumoxid (Al₂O₃) als Träger aufgezogen, oder bimetallisch auf der Basis von Nickel (Ni) und von Eisen (Fe), auf ein Aluminiumoxid (Al₂O₃), vorzugsweise Ni-Fe/γ- Al₂O₃, als Träger aufgezogen, oder auf der Basis von Nickel (Ni), auf Cerium- (Ce) und Zirkonium-Mischoxide, vorzugsweise Ce_{0,72}Zr_{0,28}O₂, als Träger aufgezogen.

15. Wärmetauschersystem, umfassend eine Vielzahl von in Reihe oder parallel miteinander verbundenen Reaktor-Wärmetauschermodulen nach einem der vorangehenden Ansprüche mit einer Anordnung übereinander und/oder nebeneinander.

16. Verwendung eines Wärmetauschermoduls nach einem der Ansprüche 1 bis 14 oder des Systems nach Anspruch 15 für die Durchführung einer exothermen oder endothermen chemischen Reaktion, vorzugsweise ausgewählt aus den Methanisierungsreaktionen von CO und/oder von CO₂, den Synthesereaktionen des Methanols und des Dimethylethers (DME), des Nass- oder Trockenreformings des Methans oder anderer Kohlenwasserstoffe, der Oxidation oder auch des Fischer-Tropsch-Verfahrens.

## Claims

1. Reactor-heat exchanger module (M) with at least two fluid circuits, comprising a stacking which extends along a longitudinal axis (X) and comprising the following elements:
- one or more elements (1) each forming a sheet of one of the two fluid circuits, called heat-transfer circuit, inside which a heat-transfer fluid is intended to circulate, each element of the heat-transfer circuit comprising channels (11) delimited at least partly by grooves (12) produced in at least one plate (10);
- one or more elements (2) each forming a sheet of the other of the two fluid circuits, called reagent circuit, inside which at least two reagents are intended to circulate, each element of the reagent circuit comprising channels (21) delimited at least partly by grooves (22) produced in at least one plate (20);
**characterized in that** the reagent circuit channels (21) each have a flow section that increases over at least part of their length and **in that** two adjacent reagent circuit channels (21.1, 21.2) are produced head-to-tail such that, in the course of a channel (21.1) in a direction along the longitudinal axis (X), its geometrical section increases whereas, in the course of the adjacent channel (21.2) in the same direction along the longitudinal axis (X) its geometrical section decreases.

2. Reactor-exchanger module according to Claim 1, in which the flow section of the reagent circuit channels (21) is increasing linearly or by levels of constant section.

3. Reactor-exchanger module according to Claim 1 or 2, in which the height of each reagent circuit channel (21) is constant.

4. Reactor-exchanger module according to any one of the preceding claims, in which the height of each reagent circuit channel (21) is less than 10 mm and, preferably, lies between 3 and 8 mm.

5. Reactor-exchanger module according to any one of the preceding claims, in which the width of each reagent circuit channel (21) is less than 50 mm and preferably lies between 3 and 8 mm at the input of the channels and lies between 5 and 40 mm at the output of the channels.

6. Reactor-exchanger module according to any one of the preceding claims, in which the number of channels (21) per sheet (2) of the reagent circuit is less than 100, preferably lies between 5 and 80.

7. Reactor-exchanger module according to any one of the preceding claims, in which the number of sheets (2) of the reagent circuit is less than 100, preferably lies between 5 and 80.

8. Reactor-exchanger module according to any one of the preceding claims, in which at least a part of the sheets of the reagent circuit is inserted individually within the stacking between two sheets of the heat-transfer circuit.

9. Reactor-exchanger module according to any one of the preceding claims, comprising, on the top and on the bottom of the stacking, a reagent circuit sheet pierced at its centre with a reagent supply or reaction product collection orifice, the channels of said sheet communicating with one another from the supply or collection orifice.

10. Reactor-exchanger module according to Claim 9, the channels emerging on the lateral sides of the stacking, the module comprising a collector-dispenser provided internally with chicanes dividing its internal volume into two, each collector-dispenser being arranged at the end of each lateral side of the stacking such that one of the two volumes separated by the chicanes supplies reagent fluid to a part of the channels in their smallest section, from one of the sheets below and above and the other of the volumes collects the reaction products originating from the other part of the channels in their largest section, to the other sheets below and above.

11. Reactor-exchanger module according to any one of the preceding claims, in which the channels of the heat-transfer circuit are produced so as to make the heat-transfer fluid circulate co-current with or counter-current to the reagents.

12. Reactor-exchanger module according to any one of the preceding claims, in which each reagent circuit sheet is inserted between two heat-transfer circuit sheets at least in the central part of the stacking.

13. Reactor-exchanger module according to any one of the preceding claims, in which at least a part of the reagent channels is filled at least partially with a conversion catalyst in powder or pellet form, or filled with a structure coated with conversion catalyst.

14. Reactor-exchanger module according to Claim 13, in which the solid conversion catalyst is based on nickel (Ni) supported by a zirconium oxide (ZrO2), or based on nickel (Ni) supported by an aluminium oxide (Al₂O₃), or bimetallic based on nickel (Ni) and iron (Fe) supported by an aluminium oxide (Al₂O₃), preferably Ni-Fe/γ- Al₂O₃, or based on nickel (Ni) supported by mixed oxides of cerium (Ce) and of zirconium, preferably Ce_{0.72}Zr_{0.28}O₂.

15. Heat exchanger system comprising a plurality of reactor-exchanger modules according to any one of the preceding claims, by being linked in series or in parallel, with an arrangement on top of one another and/or alongside one another.

16. Use of an exchanger module according to any one of Claims 1 to 14 or of the system according to Claim 15 to implement an exothermic or endothermic chemical reaction, preferably chosen from among the reactions of methanation of CO and/or of CO₂, the reactions of synthesis of methanol and of dimethylether (DME), of wet or dry reforming of methane or other hydrocarbons, of oxidation, or even Fischer-Tropsch reactions.
